## Europäisches Patentamt
## European Patent Office
## Office européen des brevets

(19)

(11) Veröffentlichungsnummer: **0 146 861**
**B1**

(12) **EUROPÄISCHE PATENTSCHRIFT**

(45) Veröffentlichungstag der Patentschrift:
31.05.89

(21) Anmeldenummer: **84115088.1**

(22) Anmeldetag: **10.12.84**

(51) Int. Cl.⁴: **G 11 B 5/127**, G 11 B 5/31, G 11 B 5/17

(54) Anordnung mit Dünnschicht-Magnetkopf zur senkrechten (vertikalen) Aufzeichnung.

(30) Priorität: **23.12.83 DE 3346777**

(43) Veröffentlichungstag der Anmeldung:
**03.07.85 Patentblatt 85/27**

(45) Bekanntmachung des Hinweises auf die Patenterteilung:
**31.05.89 Patentblatt 89/22**

(84) Benannte Vertragsstaaten:
**DE FR GB IT**

(56) Entgegenhaltungen:
EP-A-0 078 374
WO-A-82/03938

PATENTS ABSTRACTS OF JAPAN, Band 6, Nr. 237 (P-157) 1115 , 25. November 1982; & JP - A - 57 135 418
PATENTS ABSTRACTS OF JAPAN, Band 4, Nr. 39 (P-4) 521 , 28. März 1980; & JP - A - 55 12522
IBM TECHNICAL DISCLOSURE BULLETIN, Band 24, Nr. 8, Januar 1982, Seiten 4034-4035, Armonk, N.Y., US; T.A. SCHWARZ: "Vertical record/read magnetic head"
PATENTS ABSTRACTS OF JAPAN, Band 2, Nr. 7, 18. Januar 1978, Seite 10163E77; & JP - A - 52 123 220
PATENTS ABSTRACTS OF JAPAN, Band 7, Nr. 30 (P-173) 1175 , 5. Februar 1983; & JP - A - 57 183 615
PATENTS ABSTRACTS OF JAPAN, Band 7, Nr. 30 (P-173) 1175 , 5. Februar 1983; & JP - A - 57 183 614
PATENTS ABSTRACTS OF JAPAN, Band 4, Nr. 127

(73) Patentinhaber: **Siemens Aktiengesellschaft Berlin und München, Wittelsbacherplatz 2, D-8000 München 2 (DE)**

(72) Erfinder: **Schewe, Herbert, Dr., Haydnstrasse 58, D-8522 Herzogenaurach (DE)**
Erfinder: **Diepers, Heinrich, Dr., Veit- Stoss-Strasse 44, D-8552 Höchstadt/A. (DE)**

(56) Entgegenhaltungen: (Fortsetzung)
(P-26) 609 , 6. September 1980; & JP - A - 55 80818
PATENTS ABSTRACTS OF JAPAN, Band 4, Nr. 138 (P-29) 620 , 27. September 1980; & JP - A - 55 87325
PATENTS ABSTRACTS OF JAPAN, Band 4, Nr. 31 (P-2) 513 , 18, März 1980; & JP - A - 55 4734
PATENTS ABSTRACTS OF JAPAN, Band 4, Nr. 39 (P-4) 521 , 28. März 1980; & JP - A - 55 12523
PATENTS ABSTRACTS OF JAPAN, Band 5, Nr. 9 (P-45) 681 , 21. Januar 1981; & JP - A - 55 139 624
PATENTS ABSTRACTS OF JAPAN, Band 4, Nr. 153 (P-33) 635 , 25. Oktober 1980; & JP - A - 55 101 123
PATENTS ABSTRACTS OF JAPAN, Band 7, Nr. 216 (P-225) 1361 , 24. September 1983; & JP - A - 58 111 113

EP 0 146 861 B1

**Beschreibung**

Die Erfindung bezieht sich auf eine Anordnung mit

a) einem Dünnschicht-Magnetkopf,

- mit dem in eine magnetisierbare Speicherschicht eines Aufzeichnungsmediums längs einer Spur Informationen durch senkrechte (vertikale) Magnetisierung der Speicherschicht einzuschreiben sind,

- der einen den magnetischen Fluß führenden ringkopfähnlichen Leitkörper mit zwei Magnetschenkeln aufweist, deren dem Aufzeichnungsmedium zugewandten Pole in Bewegungsrichtung des Kopfes gesehen hintereinander und mit vorbestimmtem Abstand zueinander angeordnet sind,

- der eine erste zumindest weitgehend fläche Spulenwicklung enthält, deren Windungen sich durch einen zwischen den Magnetschenkeln ausgebildeten Zwischenraum erstrecken, und

- der mit einer weiteren Spulenwicklung für die Schreibfunktion versehen ist, deren Windungen zumindest teilweise an mindestens einem Teilbereich der Außenseite des ringkopfähnlichen Leitkorpers angeordnet sind, sowie

b) einer Ansteuerschaltung für die beiden Spulenwicklungen. Eine solche Anordnung mit einem entsprechenden Magnetkopf geht aus der JP-A-57 135 418 hervor.

Das Prinzip der senkrechten Magnetisierung zur Speicherung von Informationen ist allgemein bekannt (vgl. z. B. "IEEE Transactions on Magnetics", vol. MAG-16, no. 1, Jan. 1980, Seiten 71 bis 76; DE-A-2 924 013 oder EP-A-0 012 910). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy Disks) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung enthält. Dabei ist die Achse der sogenannten leichten Magnetisierung dieser Schicht senkrecht zur Oberfläche des Mediums gerichtet. Mittels eines besonderen Magnetkopfes werden dann längs einer Spur die einzelnen Informationen in aufeinanderfolgenden Abschnitten, auch Zellen oder Blöcke genannt, durch entsprechende Magnetisierung der Speicherschicht eingeschrieben. In der Praxis werden im allgemeinen die magnetischen Flußwechsel, d. h. die Übergänge von einer Magnetisierungsrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein. Somit läßt sich nach dem Prinzip der senkrechten Magnetisierung die Informationsdichte in dem Aufzeichnungsmedium vorteilhaft vergrößern.

Die für das Prinzip der longitudinalen Magnetisierung bekannten kombinierten Schreib- und Lese-Köpfe, d. h. Kopftypen, mit denen sowohl die Schreib- als auch die Lese-Funktion auszuüben ist, können jedoch nicht ohne weiteres auch für eine senkrechte Magnetisierung eingesetzt werden. Bei Verwendung dieser Köpfe, die im allgemeinen ringkopfähnliche Gestalt haben, läßt sich zwar die allgemein auch bei dem Prinzip der senkrechten Magnetisierung angestrebte Flußführung zu einem möglichst geschlossenen Kreis mit geringem magnetischen Widerstand erreichen. Jedoch ergeben sich mit diesen Ringköpfen Schwierigkeiten beim Lesen der eingeschriebenen Informationen.

Man sieht sich deshalb gezwungen, für das Prinzip der senkrechten Magnetisierung spezielle Schreib- und Lese-Köpfe zu entwickeln. Ein entsprechender Magnetkopf weist im allgemeinen einen sogenannten Hauptpol auf, mit dem ein hinreichend starkes senkrechtes Magnetfeld zum Ummagnetisieren der einzelnen Abschnitte der Speicherschicht erzeugt wird. Der notwendige magnetische Rückschluß kann dann z. B. durch einen sogenannten Hilfspol auf der gegenüberliegenden Seite des Aufzeichnungsmediums erfolgen (vgl. die genannte Literaturstelle "IEEE Trans. Magn.", vol. MAG-16). Ein magnetischer Rückschluß läßt sich ferner auch mit einem besonderen Hilfspol vornehmen, der sich auf derselben Seite wie der Hauptpol befindet (vgl. "Trans. Magn.", vol. MAG-17, no. 6, Nov. 1981, Seiten 3120 bis 3122 oder vol. MAG-18, no. 6, Nov. 1982, Seiten 1158 bis 1163 oder die genannte DE-A-2 924 013). Dementsprechend enthält der aus der genannten DE-A bekannte Schreib- und Lese-Magnetkopf einen den magnetischen Fluß führenden, ringkopfähnlichen Leitkörper aus zwei Magnetschenkeln, deren dem Aufzeichnungsmedium zugewandten Enden einen Haupt- und Hilfspol bilden, welche in Bewegungsrichtung des Kopfes gesehen hintereinander und mit vorbestimmtem Abstand zueinander angeordnet sind. Durch einen zwischen diesen beiden Magnetschenkeln ausgebildeten und mit Isolationsmaterialien ausgefüllten Zwischenraum erstrecken sich die Windungen einer zumindest weitgehend planaren Spulenwicklung. Mit dieser Wicklung wird für die Schreibfunktion der Hauptpol erregt bzw. für die Lesefunktion die Erregung des Hauptopoles registriert. Sowohl die Windungen dieser elektrischen Wicklung wie auch die Magnetschenkel sind dabei in Dünnschicht-Technik auf einem nicht-magnetischen Substrat aufgebracht.

Bei diesem bekannten Magnetkopftyp soll der Hilfspol in jedem Falle nur zur magnetischen Flußrückführung dienen. Ein eventuelles Mitschreiben des Hilfspols kann gegebenenfalls in Kauf genommen werden, da ihm der schreibende Hauptpol stets nacheilt und somit vom Hilfspol eventuell geschriebene Informationen überschreibt. Um jedoch ein Mitlesen des Hilfspoles mit seiner ablaufenden Kante zumindest weitgehend zu unterbinden, müßte der zwischen den beiden Polen ausgebildete sogenannte Luftspalt verhältnismäßig breit sein, um eine weitgehende Reduzierung der magnetischen Flußdichte am Hilfspol gewährleisten zu können. Entsprechend breite Spaltschichten lassen sich jedoch in Dünn-Schicht -Technik nur schwer realisieren.

Wegen dieser Schwierigkeiten sind auch Magnetköpfe vorgeschlagen worden, bei denen auf eine Verwendung eines besonderen Hilfspoles verzichtet wird ("IEEE Trans. Magn.", vol. MAG-18, no. 6, Nov. 1982, Seiten 1170 bis 1172; EP-A-0 071 489; "Patent Abstracts of Japan", Band 5, Nr. 9 (P-45) [681], 21.1.1981, zu JP-A-55 139 624). Bei diesen Magnetköpfen erfolgt der notwendige magnetische Rückschluß durch den Streufluß. Dementsprechend enthält der aus der genannten EP-A-0 071 489 bekannte Magnetkopf im wesentlichen nur einen einzigen, dem Aufzeichnungsmedium zugewandten Magnetschenkel, dem eine planare Schreib- und Lese-Spulenwicklung zugeordnet ist. Mit einem solchen Magnetkopftyp, der auch als Einzel-Pol-Kopf bezeichnet wird, lassen sich die für eine effektive Schreibfunktion allgemein zu stellenden Forderungen zumindest großenteils erfüllen. Dementsprechend soll für die Aufzeichnung bei hohen Bitdichten eine hinreichend große Feldstärke zum Ummagnetisieren der Speicherschicht des Aufzeichnungsmediums erreicht werden und andererseits der Abfall des Magnetfeldes an der ablaufenden Kante des Kopfes möglichst steil sein, um so geringe Übergangsbreiten der Magnetisierungsumkehr realisieren zu können (vgl. "IEEE Trans. Magn.", vol. MAG-19, no. 5, Sept. 1983, Seiten 2239 bis 2244). Jedoch kann bei fehlendem Hilfspol kein ausreichend großes Lesesignal gewonnen werden.

Aufgrund dieses Problems wird bei dem aus der genannten JP-A-57 135 418 zu entnehmenden Magnetkopf, der eine ringkopfähnliche Gestalt seines den magnetischen Fluß führenden Leitkörpers mit zwei Magnetschenkeln aufweist, mit beiden Magnetschenkeln geschrieben und gelesen. Hierzu enthält der bekannte Magnetkopf eine erste fläche Spulenwicklung, deren Windungen sich durch einen zwischen den beiden Magnetschenkeln ausgebildeten Zwischenraum erstrecken. Außerdem ist eine weitere Spulenwicklung vorgesehen, deren Windungen zumindest teilweise an der Außenseite des ringkopfähnlichen Leitkörpers angeordnet sind. Eine dem Magnetkopf zugeordnete Ansteuerschaltung sorgt dafür, daß die erste Spulenwicklung nur zum Lesen eingesetzt und mit der weiteren Spulenwicklung ausschließlich die Schreibfunktion ausgeübt wird. Dabei werden zum Schreiben in den beiden Magnetschenkeln gleiche (parallele) magnetische Flußrichtungen hervorgerufen. Die geschriebenen Abschnitte haben deshalb jeweils eine longitudinale Ausdehnung, die durch die beiden Magnetpole der Magnetschenkel bestimmt wird. Die zu erreichende Speicherdichte ist dementsprechend begrenzt.

Einen ähnlichen Aufbau und eine entsprechende Funktionsweise zweier Spulenwicklungen zeigen auch die aus der JP-A-5 512 522 zu entnehmenden Dünnfilm-Magnetköpfe.

Aufgabe der vorliegenden Erfindung ist es deshalb, die Anordnung mit den eingangs genannten Merkmalen dahingehend zu verbessern, daß eine schaltbare Schreib- und Lesefunktion nach dem Prinzip der senkrechten Magnetisierung mit jeweils verhältnismäßig hohem Wirkungsgrad zu erreichen ist. Insbesondere soll ein scharfes Schreibsignal zu erzeugen sein, das eine hohe Speicherdichte ermöglicht.

Diese Aufgabe wird erfindungsgemäß dadurch gelöst, daß mit der Ansteuerschaltung die erste Spulenwicklung sowohl als Lesespulenwicklung als auch als Schreibspulenwicklung und die weitere Spulenwicklung nur als zusätzliche Schreibspulenwicklung zu schalten sind und daß für die Schreibfunktion der sich zwischen der weiteren Schreibspulenwicklung und der ersten (Schreib-/Lese-)Spulenwicklung erstreckende eine Magnetschenkel des ringkopfähnlichen Leitkörpers der schreibende Schenkel ist, indem mittels der Ansteuerschaltung die beiden Spulenwicklungen so zusammengeschaltet sind, daß die Stromflußrichtungen in ihren zu diesem schreibenden Schenkel benachbarten Windungen entgegengesetzt gerichtet sind.

Die mit dieser Ausgestaltung der Anordnung mit einem Dünnschicht-Magnetkopf verbundenen Vorteile sind unter anderem darin zu sehen, daß die weitere Schreibspulenwicklung mit einer nur geringen Windungszahl zu erstellen ist. Hierdurch lassen sich technologisch schwierige Strukturierungsprobleme bei der Herstellung dieser Spulenwicklung weitgehend vermeiden. Dagegen kann die Schreib-/Lese-Spulenwicklung, die nur verhältnismäßig wenig Strom zieht, sehr fein strukturiert werden. Da die Windungszahl dieser Wicklung recht hoch gewählt werden kann, bedeutet dies eine entsprechende Erhöhung der Lesespannung.

Aufgrund der besonderen geometrischen Anordnung der Schreib- und Lesespulenwicklungen sowie des diesen Spulenwicklungen zugeordneten schreibenden Magnetschenkels wird bei dem erfindungsgemäßen Magnetkopf beim Schreiben mit der Schreib-/Lese-Spulenwicklung die Magnetfeldverteilung eines Ringkopfes erzeugt, während die weitere Schreibspulenwicklung die Magnetfeldverteilung eines Einzel-Pol-Kopfes hervorruft. Die Überlagerung der beiden Felder ergibt dann in dem schreibenden Magnetschenkel ein vertikales Gesamtfeld, das eine deutliche Erhöhung des Schreibfeldes und der zugehörigen Steigung des Schreibfeldes ermöglicht. Zum Lesen mit dem Magnetkopf bleibt die zusätzliche Schreibspulenwicklung außer Funktion. Der Magnetkopf kann dabei für diese Lesefunktion in bekannter Weise als Ringkopf betrieben werden.

Vorteilhafte Ausgestaltungen der Anordnung nach der Erfindung gehen aus den abhängigen Ansprüchen hervor.

Zur weiteren Erläuterung der Erfindung und deren in den Unteransprüchen gekennzeichneten Weiterbildungen wird nachfolgend auf die Zeichnung Bezug genommen, in deren

Fig. 1 und 2 schematisch zwei Ausführungsbeispiele eines erfindungsgemäßen Magnetkopfes als Längsschnitt veranschaulicht sind.

Fig. 3 zeigt in einem Diagramm das mit dem Magnetkopf gemäß Fig. 2 zu erzeugende senkrechte magnetische Grundfeld. In den

Fig. 4 und 5 sind zwei weitere Ausführungsbeispiele von Magnetköpfen nach der Erfindung in Fig. 1 oder 2 entsprechender Darstellung wiedergegeben, während aus

Fig. 6 ein anders gewählter Schnitt durch den Magnetkopf nach Fig. 5 hervorgeht.

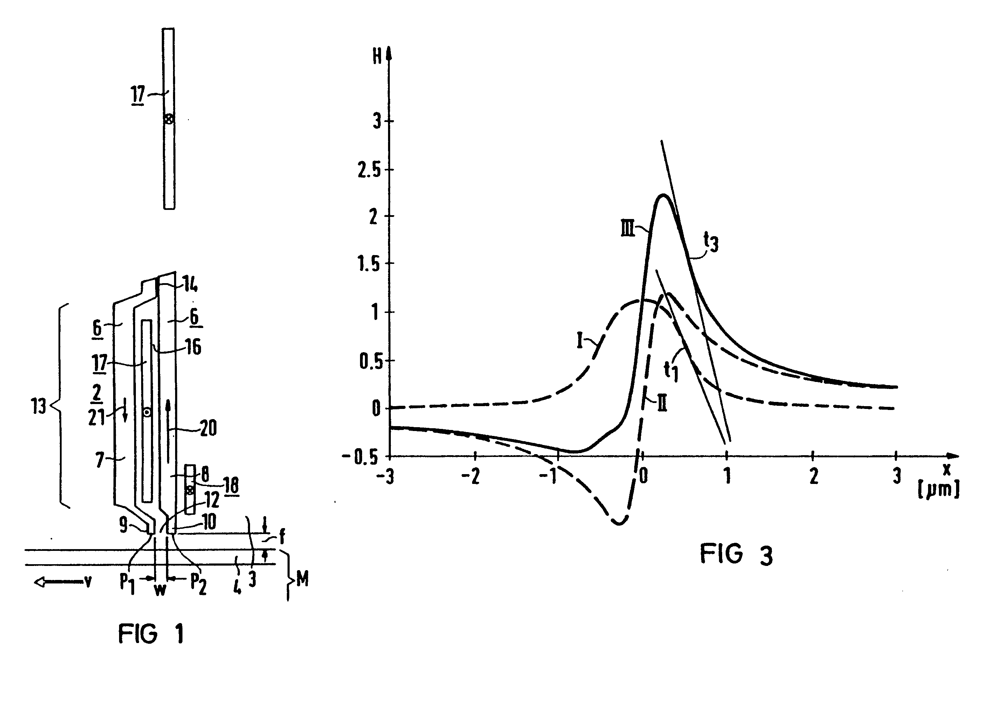

Bei dem in Fig. 1 gezeigten Schreib- und Lese-Magnetkopf nach der Erfindung wird von an sich bekannten ringkopfähnlichen Ausführungsformen für das Prinzip der senkrechten (vertikalen) Magnetisierung ausgegangen (vgl. z. B. die genannte EP-0 012 910 A1). Der in der Figur allgemein mit 2 bezeichnete Kopf, der während seiner Schreibfunktion gezeigt sein soll, befindet sich auf der Flachseite eines Substrates 3, das z. B. die Stirnseite oder die Rückseite eines gebräuchlichen, als Flugkörper bezeichneten Elementes bildet und in der Figur nicht näher ausgeführt ist. Dieser Kopf ist relativ zu einem an sich bekannten, vertikal zu magnetisierenden Aufzeichnungsmedium M in geringer Flughöhe f von beispielsweise 0,2 μm über einer besonderen Speicherschicht 4 dieses Mediums z. B. aus CoCr längs einer Spur zu führen. Im allgemeinen wird das Aufzeichnungsmedium unter dem Kopf hinweggeführt. Die entsprechende relative Bewegungsrichtung des Aufzeichnungsmediums M bezüglich des Magnetkopfes 2 ist durch eine mit v bezeichnete gepfeilte Linie angedeutet.

Der Magnetkopf 2 enthält einen den magnetischen Fluß führenden ringkopfähnlichen Leitkörper 6 mit zwei Magnetschenkeln 7 und 8. Diese Schenkel sind weitgehend und insbesondere an ihren dem Aufzeichnungsmedium M zugewandten Enden 9 und 10 zumindest annähernd senkrecht zur Oberfläche des Aufzeichnungsmediums M ausgerichtet und bilden dort jeweils einen Magnetpol $P_1$ bzw. $P_2$. Zwischen diesen beiden Polen ist ein Luftspalt 12 mit einer vorteilhaft geringen longitudinalen, d. h. in Bewegungsrichtung v weisenden Weite w von unter 1 μm, insbesondere unter 0,3 μm ausgebildet. Spaltweiten in dieser Größenordnung sind an sich bekannt (vgl. z. B. EP-A-0 078 374). In einem mittleren Bereich 13 des ringkopfähnlichen Leitkörpers 6 ist der Abstand zwischen den beiden Magnetschenkeln 7 und 8 gegenüber der Spaltweite w erweitert, indem z. B. der hinsichtlich der Bewegungsrichtung rückwärtige Magnetschenkel 7 in diesem Bereich auf einen größeren Abstand w bezüglich des vorderen, gerade ausgebildeten und dem Substrat 3 am nächsten liegenden Magnetschenkels 8 führt. Außerhalb dieses Bereiches 13 ist auf der dem Aufzeichnungsmedium M abgewandten Seite der Magnetschenkel 7 in bekannter Weise in einem Verbindungsbereich 14 an den Magnetschenkel 8 angefügt, so daß sich dann die ringkopfähnliche Gestalt des Leitkörpers 6 ergibt. Durch den zwischen den beiden Magnetschenkeln 7 und 8 in dem mittleren Bereich 13 so vorhandenen Zwischenraum 16 erstreckt sich eine flache Spulenwicklung 17, die sowohl als Schreib- als auch als Lesespule dienen soll. Diese in der Figur nur angedeutete Spulenwicklung weist im allgemeinen eine oder mehrere Lagen mit einer verhältnismäßig großen Anzahl an Windungen auf.

Für die Schreibfunktion ist gemäß der Erfindung eine zusätzliche, beispielsweise weitgehend planare Spulenwicklung 18 vorgesehen, deren Windungen an der Außenseite eines der beiden Magnetschenkel, beispielsweise des inneren, d. h. dem Substrat 3 zugewandten Schenkels 8, vorbeilaufen. Die Windungen dieser dort zumindest weitgehend parallel zur Lesespulenwicklung 17 angeordneten Schreibspulenwicklung 18 sind somit im Bereich 13 des ringkopfähnlichen Leitkörpers 6 durch den Magnetschenkel 8 getrennt.

Für die Schreibfunktion sollen gemäß der Erfindung in den beiden Spulenwicklungen 17 und 18 die durch die eingezeichneten Stromflußrichtungssymbole veranschaulichten Schreib-Ströme fließen, die zumindest im Bereich des ringkopfähnlichen Leitkörpers 6 zueinander entgegengesetzt gerichtet sein können. In dem von den beiden Spulenwicklungen eingeschlossenen Magnetschenkel 8 wird dann ein durch eine gepfeilte Linie 20 angedeuteter magnetischer Fluß hervorgerufen, der sich durch Überlagerung der von den beiden Spulenwicklungen jeweils erzeugten Felder ergibt. Dieser Magnetfluß ist in dem Schenkel 8 und somit an dem entsprechenden Pol $P_2$ wesentlich größer als der in dem äußeren Magnetschenkel 7 hervorgerufene und durch eine gepfeilte Linie 21 mit vergleichsweise kürzerer Länge angedeutete magnetische Fluß. Der erfindungsgemäße Magnetkopf 2 schreibt somit vorteilhaft quasi wie ein Einzel-Pol-Kopf im wesentlichen nur mit dem Pol $P_2$ des Magnetschenkels 8. Außer für diese Schreibfunktion bleibt jedoch die Spulenwicklung 18 stromlos, so daß dann der Magnetkopf 2 nur mit der Lesespulenwicklung 17 als gewöhnlicher Ringkopf betrieben wird.

Für die Herstellung des Magnetkopfes 2 in Dünnschicht- bzw. Dünnfilm-Technik wird im allgemeinen ein Flugkörper mit einem Substrat verwendet, das z. B. aus TiC und $Al_2O_3$ besteht. Gegebenenfalls kann das entsprechende Substrat 3 noch mit einer hinreichend dicken Isolationsschicht z. B. aus $Al_2O_3$ versehen werden. Zum Aufbau der Magnetschenkel 7 und 8 werden dünne Magnetschichten aus besonderen weichmagnetischen Materialien wie z. B. aus speziellen NiFe-Legierungen (Permalloy: Ni/Fe-81/19) oder aus FeB durch Sputtern, Aufdampfen oder galvanische Abscheidung aufgebracht und jeweils durch eine nicht-magnetische Zwischenlage z. B. aus $SiO_2$ oder $Al_2O_3$ voneinander getrennt. Die Magnetisierung dieser Magnetschichten liegt dabei in der Schichtebene. Durch den Herstellungsprozeß bedingt, weisen die Magnetschichten eine uniaxiale Anisotropie auf, d. h., jede Magnetschicht hat zwei um 90° gedrehte Anisotropieachsen, die als leichte bzw. schwere Richtung bezeichnet werden. Die Magnetisierung liegt bevorzugt parallel oder antiparallel zur leichten Richtung. Die leichte Richtung der Magnetisierung, die z. B. beim Aufbringen der jeweiligen Schicht durch ein angelegtes Magnetfeld induziert werden kann, liegt im allgemeinen immer senkrecht zur Richtung des magnetischen Flusses in dem Leitkörper 6, d. h. im Bereich der Magnetpole $P_1$ und $P_2$ im wesentlichen parallel zur Oberfläche des Aufzeichnungsmediums M (vgl. z. B. den genannten "Patent Abstract of Japan" zu JP-A-55 139 624). Die aufgewachsenen unterschiedlichen Schichten werden durch an sich bekannte Techniken wie Photolithographie, Plasma-, Ionenstrahl- oder naßchemisches Ätzen strukturiert, um so die beiden Magnetschenkel des Kopfes auszubilden.

Zum Aufbau des Magnetkopfes 2 werden zunächst auf dem Substrat 3 bzw. auf dessen Isolationsschicht die wenigen Windungen der als zusätzliche Schreibspulenwicklung 18 vorgesehenen Spule aufgebracht. Beispielsweise kann in die Substratoberfläche, z. B. aus $Al_2O_3$ bestehend, durch Ionenstrahl- oder Plasmaätzen eine Ausnehmung geätzt werden. Anschließend wird dann eine Metallschicht, z. B. aus Cu oder Au oder Al abgeschieden und in bekannter Weise strukturiert und eingeebnet. Der weitere Aufbau des Magnetkopfes kann damit auf einer weitgehend ebenen Unterlage erfolgen. Als nächstes wird der innere Magnetschenkel 8 aufgebracht. Dieser Magnetschenkel ist bis auf den Bereich seiner Polspitze $P_2$ verhältnismäßig dick, beispielsweise 2 bis 4 µm dick ausgebildet und verjüngt sich zur Polspitze $P_2$ auf etwa 0,2 bis 1 µm. Der Magnetschenkel 8 wird dann bis auf die Verbindungsstelle 14 mit dem zweiten Magnetschenkel 7 mit einer Isolations- und Spaltschicht überzogen, die z. B. aus einem

harten Material wie $Al_2O_3$ besteht. Nach Fertigstellung dieses Magnetschenkels und der Spaltschicht werden dann die einzelnen Windungen der als Schreib- und Lesespule dienenden Wicklung 17 ebenfalls in Dünnschicht-Technik in mindestens einer zur Substratoberfläche parallelen Ebene hergestellt und strukturiert. Da die in der Wicklung 17 auftretenden Ströme verhältnismäßig gering sind, kann der Leiterquerschnitt entsprechend klein gewählt werden. Aus fertigungstechnischen Gründen wird man allerdings extrem geringe Dicken und sehr feine Strukturen vermeiden. Die z. B. aus Cu, Au oder Al bestehenden Windungen dieser allgemein mehrlagig ausgeführten Wicklung können beispielsweise Querschnitte von 0,5 µm X 3 µm aufweisen und sind in ein spezielles Einebnungsmaterial eingebettet. Dieses Material kann z. B. ein Kunststoff-Lack, insbesondere auf Polyimid-Basis, sein.

In einem nächsten Verfahrensschritt wird dann der zweite lamellierte Magnetschenkel 7 aufgebracht und strukturiert. Dabei sind die Magnetschichten dieses Schenkels 7 im Bereich des Spaltes 12 nur über die Spaltschicht und in dem mittleren Bereich 13 zusätzlich über die Einebnungsschichten mit den eingelagerten Windungen der Spulenwicklung 17 von dem Magnetschenkel 8 getrennt. Im Bereich der Verbindungsstelle 14 sind die beiden Magnetschenkel 7 und 8 aneinandergefügt, so daß eine ringkopfähnliche Gestalt des Magnetkopfes erreicht wird.

Zuletzt wird zum Schutz des so hergestellten Dünnschicht-Magnetkopfes 2 noch eine verhältnismäßig dicke Protektionsschicht z. B. aus $Al_2O_3$ vorgesehen.

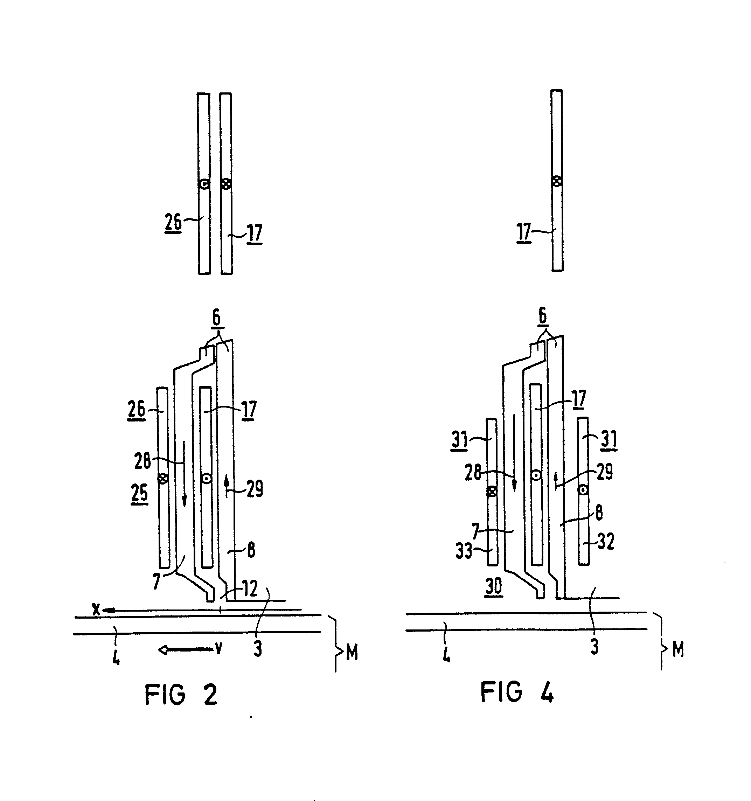

Die in den Fig. 2 und 4 angedeuteten Ausführungsformen von Magnetköpfen nach der Erfindung unterscheiden sich von dem beschriebenen Magnetkopf 2 gemäß Fig. 1 im wesentlichen nur durch die Lage der Windungen der zusätzlichen Schreibspulenwicklung bezüglich der Schreib-/Lese-Spulenwicklung. Dabei sind in den Figuren übereinstimmende Teile mit den gleichen Bezugszeichen versehen.

In Abwandlung des Magnetkopfes 2 nach Fig. 1 ist bei dem Magnetkopf 25 nach Fig. 2 seine zusätzliche, als Schreibspule dienende Wicklung 26 nicht auf der Innenseite des Magnetkopfes unmittelbar an der Oberfläche des Substrates 3 angeordnet, sondern befindet sich auf der Außenseite des Magnetkopfes. Dementsprechend wird auch die Schreibfunktion im wesentlichen mit dem äußeren Magnetschenkel 7 ausgeübt, indem der durch Überlagerung der von den beiden Spulenwicklungen erzeugten Magnetfelder hervorgerufene magnetische Fluß 28 in diesem Schenkel wesentlich größer als der magnetische Fluß 29 in dem inneren, dem Substrat 3 zugewandten Schenkel 8 ist.

Der in Fig. 2 gezeigte Magnetkopf 25 soll sich gerade während einer Schreibfunktion befinden, wozu erfindungsgemäß sowohl die zusätzliche Schreibspulenwicklung 26 als auch die Schreib-/Lese-Spulenwicklung 17 eingesetzt werden. Hierbei treten in der Speicherschicht 4 des Aufzeichnungsmediums Magnetfeldstärkeverhältnisse auf, wie sie aus dem Diagramm der Fig. 3 entnehmbar sind. Als Ordinate ist die Feldstärke H in willkürlichen Einheiten gewählt, während auf der Abszisse die Ortslage x bezüglich der Mitte des Spaltes 12 in Mikrometern aufgetragen ist (vgl. Fig. 2). Der mit bezeichnete Kurvenverlauf ergibt sich für den Magnetkopf bei eingeschalteter Schreibspulenwicklung 26 und ausgeschalteter Schreib-/Lese-Spulenwicklung 17, während der mit II bezeichnete Kurvenverlauf sich bei alleiniger Erregung der Schreib-/Lese-Spulenwicklung 17 ergibt. Werden hingegen beide Spulenwicklungen 17 und 26 zum Schreiben eingesetzt, können Feldstärkeverhältnisse ausgebildet werden, die den mit III bezeichneten Kurvenverlauf ergeben. Dabei kann der Wirkungsgrad der Schreib-/Lese-Spulenwicklung 17 recht hohe Werte, z. B. 70 % aufweisen. Der Wirkungsgrad der Schreibspulenwicklung 26 ist vor allem von der geometrischen Anordnung der Spulenwicklung im Bereich des Poles abhängig und liegt um so höher, je näher die Spulenwicklung an dem entsprechenden Pol liegt. Typischerweise kann der Wirkungsgrad etwa 10 % betragen. Wegen des unterschiedlichen Wirkungrades können jedoch die Widerstände der beiden Spulenwicklungen 17 und 26 so gewählt werden, daß bei einer Parallelschaltung dieser Spulen unter Berücksichtigung der Polarität ein optimales magnetisches Gesamtfeld erzeugt wird, dessen Kurvenverlauf den in dem Diagramm mit III bezeichneten Verlauf annimmt.

Wie aus dem Diagramm der Fig. 3 ferner zu entnehmen ist, wird vorteilhaft auch durch den gleichzeitigen Einsatz der Schreib-/Lese-Spulenwicklung 17 und der Schreibspulenwicklung 26 für die Schreibfunktion eine größere Steilheit des schreibenden Magnetfeldes erzeugt. Dementsprechend hat die mit $t_1$ in dem Diagramm eingetragene Tangente an die nur der Schreibspulenwicklung 26 zugeordnete Kurve I eine kleinere Steigung als die entsprechende Tangente $t_3$ an die Kurve III des sowohl von der Schreibspulenwicklung 26 als auch von der Schreib-/Lese-Spulenwicklung 17 gemeinsam erzeugten Gesamtfeldes.

Während bei den Ausführungsformen der Magnetköpfe 2 und 25 nach Fig. 1 bzw. Fig. 2 angenommen wurde, daß die jeweiligen Schreibspulenwicklungen 18 bzw. 26 weitgehend planar gestaltet sind, kann gemäß dem in Fig. 4 angedeuteten Ausführungsbeispiel eines Magnetkopfes 30 nach der Erfindung auch eine zusätzliche Schreibspulenwicklung 31 vorgesehen werden, welche den aus den beiden Magnetschenkeln 7 und 8 gebildeten ringkopfähnlichen Leitkörper 6 zumindest in einem Teilbereich umschließt. Diese Spulenwicklung 31 des ebenfalls in Dünnschicht-Technik zu erstellenden Magnetkopfes 30 wird z. B. von einer einzigen breiten Spulenschleife oder auch von mehreren Windungen ausgebildet. Dementsprechend enthält sie einen flachen, inneren Teil 32 auf der Oberfläche des Substrates 3, der mit einem flachen äußeren Teil 33 auf der Außenseite des Magnetschenkels 7 zur Ausbildung der Wicklung 31 verbunden ist. Auf Grund der in der Figur angenommenen Stromflußrichtungen in der Schreib-/Lese-Spulenwicklung 17 und der weiteren Schreibspulenwicklung 31 wird die Schreibfunktion im wesentlichen mit dem äußeren Magnetschenkel 7 hervorgerufen. Selbstverständlich könnte auch mit dem inneren Magnetschenkel 8 geschrieben werden, falls die Stromflußrichtung in einer der Spulenwicklungen geändert würde.

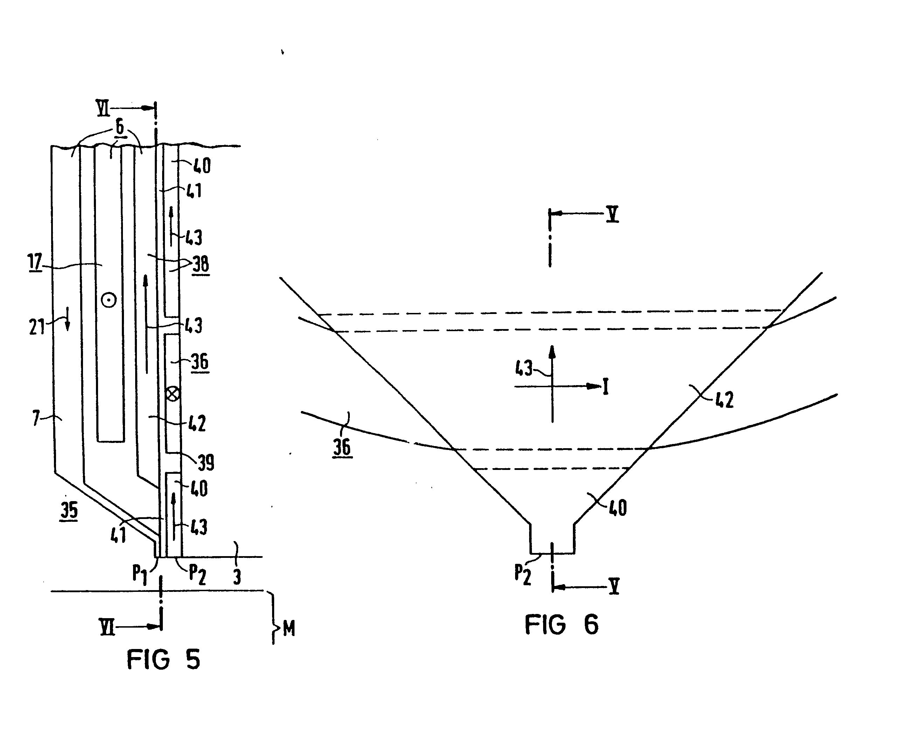

In den Fig. 5 und 6 sind zwei Längsschnitte in um 90° gegeneinandergedrehten Schnittebenen eines Teils einer Ausführungsform eines Magnetkopfes 35 nach der Erfindung gezeigt, bei dem von dem in Fig. 1 wiedergegebenen Magnetkopf 2 ausgegangen wird. Abweichend von diesem Magnetkopf 2 ist bei dem Magnetkopf 35 dessen zusätzliche Schreibspulenwicklung 36 auf der Seite des Substrates 3 vorteilhaft in den schreibenden und mit 38 bezeichneten Magnetschenkel integriert. Hierzu weist dieser Magnetschenkel eine Ausnehmung 39 in der Nähe seines Poles $P_2$ auf, durch welche sich die mindestens eine Windung der zusätzlichen Schreibspulenwicklung 36 erstreckt. Zur Herstellung dieses Magnetschenkels 38 kann beispielsweise zunächst auf der Oberfläche des Substrates 3 mindestens eine Schicht 40 aus dem weichmagnetischen Schenkelmaterial mit einer der Windung der Spulenwicklung 36 entsprechenden Dicke aufgebracht werden. Daran anschliessend wird in diese Schicht die Ausnehmung 39 eingearbeitet und in diese Ausnehmung die entsprechende Windung der Spulenwicklung 36 eingebracht. Nach Isolation dieses Aufbaus, beispielsweise mittels einer Spalt- und Isolationsschicht 41 werden dann die restlichen Schichten 42 des Magnetschenkels 38 aufgebracht. Die sich daran anschließenden Herstellungsschritte können denen zur Herstellung des Magnetkopfes 2 nach Fig. 1 entsprechen.

Bei dem in Fig. 6 gezeigten Schnitt in der mit VI gekennzeichneten Schnittebene längs der Oberfläche des Magnetschenkels 38 sind die von diesem Magnetschenkel überdeckten Teile durch gestrichelte Linien angedeutet. Dabei sind die Richtung des in diesem Schenkel 38 erzeugten Magnetflusses 43 sowie die Flußrichtung des Stromes I in der Spulenwicklung 36 durch gepfeilte Linien veranschaulicht.

Bei der in den Fig. 5 und 6 gezeigten Ausführungsform eines erfindungsgemäßen Magnetkopfes 35 kann die zusätzliche, als Schreibspule dienende Spulenwicklung 36 technologisch besonders einfach realisiert werden. Hierzu wird nämlich im Bereich der Polspitze $P_2$ die mindestens eine Schicht 40 des Magnetschenkels 38 aus dem weichmagnetischen Material so strukturiert, daß sie teilweise als Leiterbahn für die Spulenwicklung 36 verwendet werden kann.

**Patentansprüche**

1. Anordnung mit
a) einem Dünnschicht-Magnetkopf (2; 25; 30; 35),
- mit dem in eine magnetisierbare Speicherschicht (4) eines Aufzeichnungsmediums (M) längs einer Spur Informationen durch senkrechte (vertikale) Magnetisierung der Speicherschicht (4) einzuschreiben sind,
- der schichtweise auf einem nicht-magnetischen Substrat (3) aufgebaut ist,
- der einen den magnetischen Fluß führenden ringkopfähnlichen Leitkörper (6) mit zwei Magnetschenkeln (7, 8, 38) aufweist, deren dem Aufzeichnungsmedium (M) zugewandten Pole ($P_1$, $P_2$) in Bewegungsrichtung des Kopfes gesehen hintereinander und mit vorbestimmtem Abstand (w) zueinander angeordnet sind,
- der eine erste zumindest weitgehend fläche Spulenwicklung (17) enthält, deren Windungen sich durch einen zwischen den Magnetschenkeln ausgebildeten Zwischenraum (16) erstrecken, und
- der mit einer weiteren Spulenwicklung (18, 26, 31, 36) für die Schreibfunktion versehen ist, deren Windungen zumindest teilweise an mindestens einem Teilbereich der Außenseite des ringkopfähnlichen Leitkörpers (6) angeordnet sind,
sowie
b) einer Ansteuerschaltung für die beiden Spulenwicklungen (17, 18, 26, 31, 36) des Magnetkopfes (2; 25; 30; 35), dadurch gekennzeichnet daß mit der Ansteuerschaltung die erste Spulenwicklung (17) sowohl als Lesespulenwicklung als auch als Schreibspulenwicklung und die weitere Spulenwicklung (18, 26, 31, 36) nur als zusätzliche Schreibspulenwicklung zu schalten sind, und daß für die Schreibfunktion der sich zwischen der weiteren Schreibspulenwicklung (18; 26, 31, 36) und der ersten Spulenwicklung (17) erstreckende eine Magnetschenkel (8; 38) des ringkopfähnlichen Leitkörpers (6) der schreibende Schenkel ist, indem mittels der Ansteuerschaltung die beiden Spulenwicklungen so zusammengeschaltet sind, daß die Stromflußrichtungen in ihren zu diesem schreibenden Schenkel (8; ‚38) benachbarten Windungen entgegengesetzt gerichtet sind.

2. Anordnung nach Anspruch 1, dadurch gekennzeichnet daß der äußere, auf dem Substrat (3) abgewandten Seite des Magnetkopfes (25; 30) liegende Magnetschenkel (7) mittels der vorbestimmten Stromflußrichtungen in der ersten Spulenwicklung (17) und der weiteren Schreibspulenwicklung (26; 31) im wesentlichen der schreibende Schenkel ist.

3. Anordnung nach Anspruch 1 oder 2, dadurch gekennzeichnet daß die Windungen der weiteren Schreibspulenwicklung (18; 31, 36) auch auf der dem Substrat (3) zugewandten Seite des Magnetkopfes (2; 30; 35) angeordnet sind.

4. Anordnung nach den Ansprüchen 2 und 3, dadurch gekennzeichnet daß die Stromflußrichtung in den auf der Substratseite liegenden Windungen der weiteren Schreibspulenwicklung (31) gleichgerichtet zur Stromflußrichtung in den benachbarten Windungen der ersten Spulenwicklung (17) verläuft (Fig. 4).

5. Anordnung nach Anspruch 3, dadurch gekennzeichnet daß die Windungen der weiteren Schreibspulenwicklung (18; 31; 36) auf der dem Substrat (3) zugewandten Seite des Magnetkopfes (2; 30; 35) zumindest teilweise im Bereich des den Pol ($P_2$) bildenden Endes (10) des benachbarten Magnetschenkels (8; 38) angeordnet sind.

6. Anordnung nach einem der Ansprüche 1 bis 5, dadurch gekennzeichnet daß die weitere Schreibspulenwicklung (18; 26; 31; 36) eine oder mehrere Windungen in mindestens einer Ebene aufweist.

7. Anordnung nach einem der Ansprüche 1 bis 6, dadurch gekennzeichnet daß die weitere Schreibspulenwicklung (36) zumindest teilweise in den zu ihr benachbarten Magnetschenkel (38) eingefügt ist.

8. Anordnung nach Anspruch 7, dadurch gekennzeichnet daß die Windungen der weiteren Schreibspulenwicklung (36) im Bereich des zu ihr benachbarten Magnetschenkels (38) durch eine Strukturierung eines entsprechenden Teiles (40) dieses Schenkels ausgebildet sind.

9. Anordnung nach einem der Ansprüche 1 bis 8, dadurch gekennzeichnet daß die erste Spulenwicklung (17) als ein- oder mehrlagige, zumindest weitgehende planare Struktur mit mehreren Windungen ausgebildet ist.

10. Anordnung nach einem der Ansprüche 1 bis 9, dadurch gekennzeichnet daß zumindest teilweise sein den Magnetfluß führender Leitkorper (6) aus weichmagnetischem Material besteht.

11. Anordnung nach Anspruch 10, dadurch gekennzeichnet daß sein den Magnetfluß führender Leitkörper (6) aus einem Material besteht, dessen leichte Magnetisierung zumindest weitgehend senkrecht zur Führungsrichtung des Magnetflusses gerichtet ist.

12. Anordnung nach einem der Ansprüche 1 bis 11, dadurch gekennzeichnet daß der Abstand (w) zwischen den dem Aufzeichnungsmedium (M) zugewandten Enden (9, 10) der Pole ($P_1$, $P_2$) der Magnetschenkel (7, 8; 38) höchstens 1 μm

beträgt.

13. Anordnung nach einem der Ansprüche 1 bis 12, dadurch gekennzeichnet daß zwischen den Magnetschenkeln (7, 8; 38) des den Magnetfluß führenden Leitkörpers (6) ein vom Abstand (w) zwischen den dem Aufzeichnungsmedium (M) zugewandten Enden (9, 10) ihrer Pole ($P_1$, $P_2$) auf einen größeren Abstand (w') erweiterter Zwischenraum (16) ausgebildet ist, in dem die Windungen der ersten Spulenwicklung (17) teilweise angeordnet sind.

**Claims**

1. Arrangement with
a) a thin-layer magnetic head (2; 25; 30; 35),
- with which information is to be written into a magnetisable storage layer (4) of a recording medium (M) along a track by perpendicular (vertical) magnetisation of the storage layer (4),
- which is of layered construction on a nonmagnetisable substrate (3),
- which has an annular-head-like conductor body (6) conveying the magnetic flux, with two magnetic limbs (7, 8, 38) whose poles ($P_1$, $P_2$) facing the recording medium (M) are arranged one behind the other seen in the direction of movement of the head and with a predetermined small space (w) between each other,
- which contains a first, at least substantially flat coil winding (17) whose turns extend through an intermediate area (16) formed between the magnetic limbs, and
- which is provided with a further coil winding (18, 26, 31, 36) for the write function, the turns of which are arranged at least partially on at least one part area of the outside of the annular-head-like conductor body (6) and
b) a control circuit for the two coil windings (17, 18, 26, 31, 36) of the magnetic head (2; 25; 30; 35),
characterised in that with the control circuit the first coil winding (17) is to be connected both as a read coil winding and as a write coil winding and the further coil winding (18, 26, 31, 36) is to be connected only as an additional write coil winding, and in that for the write function the magnetic limb (8; 38) of the annular-head-like conductor body (6) extending between the further write coil winding (18; 26, 31, 36) and the first coil winding (17) is the writing limb, with the two coil windings being connected together by means of the control circuit so that the current flux directions are directed oppositely in their windings adjacent to this writing limb (8; 38).

2. Arrangement according to claim 1 characterised in that the outer magnetic limb (7) lying on the side of the magnetic head (25; 30) remote from the substrate (3), by, means of the predetermined current flux directions in the first coil winding (17) and the further write coil winding (26; 31), is substantially the writing limb.

3. Arrangement according to claim 1 or 2, characterised in that the turns of the further write coil winding (18; 31, 36) are also arranged on the side of the magnetic head (2; 30; 35) facing the substrate (3).

4. Arrangement according to claims 2 and 3, characterised in that the current flux direction extends in the turns of the further write coil winding (31) lying on the substrate side in the same direction as the current flux direction in the adjacent turns of the first coil winding (17) (Fig. 4).

5. Arangement according to claim 3, characterised in that the turns of the further write coil winding (18; 31; 36) are arranged on the side of the magnetic head (2; 30; 35) facing the substrate (3) at least partially in the area of the end (10) of the adjacent magnetic limb (8; 38) forming the pole ($P_2$)

6. Arrangement according to one of claims 1 to 5, characterised in that the further write coil winding (18; 26; 31; 36) has one or more turns in at least one plane.

7. Arrangement according to one of claims 1 to 6, characterised in that the further write coil winding (36) is inserted at least partially into the magnetic limb (38) adjacent to it.

8. Arrangement according to claim 7, characterised in that the turns of the further write coil winding (36) are formed in the area of the magnetic limb (38) adjacent to it by structuring of a corresponding part (40) of this limb.

9. Arrangement according to one of claims 1 to 8, characterised in that the first coil winding (17) is formed as a single- or multi-layer structure with several turns which is at least substantially planar.

10. Arrangement according to one of claims 1 to 9, characterised in that its conductor body (6) conveying the magnetic flux is at least partially of soft magnetic material.

11. Arrangement according to claim 10, characterised in that its conductor body (6) conveying the magnetic flux is of a material whose direction of easy magnetisation is at least substantially perpendicular to the conveying direction of the magnetic flux.

12. Arrangement according to one of claims 1 to 11, characterised in that the distance (w) between the ends (9, 10) of the poles ($P_1$, $P_2$) of the magnetic limbs (7, 8; 38) facing the recording medium (M) is at the most 1 μm.

13. Arrangement according to one of claims 1 to 12, characterised in that between the magnetic limbs (7, 8; 38) of the conductor body (6) conveying the magnetic flux there is formed an intermediate space (16) widened from the distance (w) between the ends (9, 10) of their poles ($P_1$, $P_2$) facing the recording medium (M), to a greater distance (w'), in which space the turns of the first coil winding (17) are partially arranged.

## Revendications

1. Dispositif comportant

a) une tête magnétique à couches minces (2; 25; 30; 35),

- à l'aide de laquelle des informations doivent être enregistrées dans une couche de mémoire aimantable (4) d'un support d'enregistrement (M), le long d'une piste, au moyen d'une aimantation perpendiculaire (verticale) de la couche de mémoire (4),

- qui est disposée sous la forme d'une structure en couches sur un substrat amagnétique (3),

- qui possède un corps de guidage (6) en forme de tête annulaire, guidant le flux magnétique et comportant deux branches magnétiques (7, 8, 38), dont les pôles ($P_1$, $P_2$) tournés vers le support d'enregistrement (M) sont disposés l'un derrière l'autre dans la direction de déplacement de la tête, à une distance réciproque prédéterminée (w),

- qui comporte un premier enroulement de bobine (17) plat au moins dans une large mesure, dont les spires traversent un espace intermédiaire (16) formé entre les branches magnétiques, et

- qui comporte un autre enroulement de bobine (18, 26, 31, 36) pour la fonction d'enregistrement, dont les spires sont disposées au moins partiellement sur au moins une zone partielle de la face extérieure du corps de guidage (6) en forme de tête annulaire, ainsi que

b) un circuit de commande pour les deux enroulements de bobine (17, 18, 26, 31, 36) de la tête magnétique (2; 25; 30; 35),

caractérisé par le fait que le premier enroulement de bobine (17) doit être raccordé aussi bien en tant qu'enroulement de bobine de lecture qu'enroulement de bobine d'enregistrement, et l'autre enroulement de bobine (18, 26, 31, 36) doit être raccordé uniquement en tant qu'enroulement de bobine supplémentaire d'enregistrement au circuit de commande et que pour la fonction d'enregistrement, la branche magnétique (8; 38), qui s'étend entre l'enroulement de bobine supplémentaire d'enregistrement (18; 26; 31, 36) et le premier enroulement de bobine (17), du corps de guidage (6) en forme de tête annulaire, est la branche d'enregistrement, en faisant en sorte qu'à l'aide du circuit de commande, les deux enroulements de bobine sont interconnectés de telle façon que les directions des flux de courant dans leurs spires voisines de cette branche d'enregistrement (8; 38) sont opposées.

2. Dispositif selon la revendication 1, caractérisé par le fait que la branche magnétique extérieure (7), située sur la face de la tête magnétique (25; 30), tournée à l'opposé du substrat (3), constitue essentiellement la branche d'enregistrement, grâce à la présence des directions prédéterminées des flux de courant dans le premier enroulement de bobine (17) et dans l'enroulement de bobine supplémentaire

d'enristrement (26; 31).

3. Dispositif suivant la revendication 1 ou 2, caractérisé par le fait que les spires de l'enroulement de bobine supplémentaire d'enregistrement (18; 31, 36) sont disposées sur la face de la tête magnétique (2; 30; 35), tournée vers le substrat (3).

4. Dispositif suivant les revendications 2 et 3, caractérisé par le fait que la direction du flux de courant dans les spires, situées du côté du substrat, de l'enroulement de bobine supplémentare d'enregistrement (31) coïncide avec la direction du flux de courant dans les spires voisines du premier enroulement de bobine (17) (figure 4).

5. Dispositif suivant la revendication 3, caractérisé par le fait que les spires de l'enroulement de bobine supplémentaire d'enregistrement (18; 31; 36) sont disposées sur la face de la tête magnétique (2; 30; 35), touronées vers le substrat (3), au moins partiellement dans la zone de l'extrémité (10), qui constitue le pôle ($P_2$), de la branche magnétique voisine (8; 38).

6. Dispositif suivant l'une des revendications 1 à 5, caractérisé par le fait que l'enroulement de bobine supplémentaire d'enregistrement (18; 26; 31; 36) possède une ou plusieurs spires situées dans au moins un plan.

7. Dispositif suivant l'une des revendications 1 à 6, caractérisé par le fait que l'enroulement de bobine supplémentaire d'enregistrement (36) est inséré au moins partiellement dans la branche magnétique (38), qui en est voisine.

8. Dispositif suivant la revendication 7, caractérisé par le fait que les spires de l'enroulement de bobine supplémentaire d'enregistrement (36) sont réalisées, dans la zone de la branche magnétique (38), qui est voisine de cet enroulement, au moyen d'une structuration d'une partie correspondante (40) de cette branche.

9. Dispositif suivant l'une des revendications 1 à 8, caractérisé par le fait que le premier enroulement de bobine (17) est réalisé sous la forme d'une structure au moins dans une large mesure plane, à une ou plusieurs couches, comportant plusieurs spires.

10. Dispositif selon l'une des revendications 1 à 9, caractérisé par le fait qu au moins en partie son corps de guidage (6), qui guide le flux magnétique, est réalisé en un matériau magnétique doux.

11. Dispositif suivant la revendication 10, caractérisé par le fait que son corps de guidage (6), qui guide le flux magnétique, est réalisé en un matériau, dont l'aimantation facile est dirigée au moins dans une large mesure perpendiculairement à la direction de guidage du flux magnétique.

12. Dispositif suivant l'une des revendications 1 à 11, caractérisé par le fait que la distance (w) entre les extrémités (9, 10), tournées vers le support d'enregistrement (M), des pôles ($P_1$, $P_2$) des branches magnétiques (7, 8; 38) est égale au

maximum à 1 μm.

13. Dispositif suivant l'une des revendications 1 à 12, caractérisé par le fait qu'entre les branches magnétiques (7, 8; 38) du corps de guidage (6), qui guide le flux magnétique, se trouve ménagé un espace intermédiaire (16), dont la largeur augmente depuis la valeur (w) entre les extrémités (9, 10), tournées vers le support d'enregistrement (M), de ses pôles ($P_1$, $P_2$) à une valeur plus importante (w') et dans lequel sont partiellement disposées les spires du premier enroulement de bobine (17).

FIG 1

FIG 3

EP 0 146 861 B1

FIG 2

FIG 4

FIG 5

FIG 6

EP 0 146 861 B1